# EUROPEAN PATENT APPLICATION

(11) **EP 3 434 350 A1**
(43) Date of publication of application: **30.01.2019**
(21) Application number: 18185568.5
(22) Date of filing: 25.07.2018
(51) Int. Cl.: B01D 19/00, B01D 63/02, B01D 69/08

(54) **FLUID DEGASSING SYSTEMS**

(30) Priority: 25.07.2017 US 201715659381
(71) Applicant: Hamilton Sundstrand Corporation, Charlotte, NC 28217-4578 (US)
(72) Inventor: DYER, Gerald P., Suffield, Connecticut 06078 (US)
(74) Representative: Dehns

(57) **Abstract**

A fluid degassing device includes a first housing (101), a second housing (103) disposed at least partially within the first housing (101), and a first flow circuit (104) defined by the second housing (103) and first housing (101) and the first housing (101), wherein the second housing (103) includes a second housing opening (105) of the first flow circuit (104) and the first housing (101) includes a first housing opening (105) of the first flow circuit (104). The device includes a tube bundle (109) of selectively permeable membrane tubes disposed in the first flow circuit (104) between the second housing (103) and first housing (101). The tube bundle (109) is disposed at least partially around a circumference of the second housing. The tube bundle is configured to be in fluid communication with a second flow circuit to fluidly communicate with an inner channel of the tubes of the tube bundle (109).

## Description

### BACKGROUND

### 1. Field

The present disclosure relates to fluid systems, more specifically to fluid degassing (e.g., fuel deoxygenation) systems.

### 2. Description of Related Art

Traditionally, in fuel deoxygenation systems, fuel passes over a bundle of membrane coated hollow tubes with a vacuum applied to the inside of the tubes. Oxygen molecules pass through the membrane, and the fuel is deoxygenated. The configuration of the tube bundle is inefficient, as most of the fuel passes over only the outside of bundle. The hollow tubes located at the center of the bundle do not have fuel passing over them, and as such are inefficient.

Such conventional methods and systems have generally been considered satisfactory for their intended purpose. However, there is still a need in the art for improved fuel deoxygenations systems. The present disclosure provides a solution for this need.

### SUMMARY

A fluid degassing device includes a first housing, a second housing disposed at least partially within the first housing, and a first flow circuit defined by the second housing and first housing and the first housing, wherein the second housing includes a second housing opening of the first flow circuit and the first housing includes a first housing opening of the first flow circuit. The device includes a tube bundle of selectively permeable membrane tubes disposed in the first flow circuit between the second housing and first housing . The tube bundle is disposed at least partially around a circumference of the second housing. The tube bundle is configured to be in fluid communication with a second flow circuit to fluidly communicate with an inner channel of the tubes of the tube bundle. The second flow circuit is partially fluidly isolated from the first flow circuit such that at least one first fluid cannot pass through a wall of one or more tubes, but such that at least one second fluid can pass through the wall of the one or more tubes to remove the first fluid from the second fluid.

The second housing can include an elongate portion extending from a base portion that is configured to mount to the first housing, wherein the tube bundle is disposed between the elongate portion and the first housing. The tube bundle can be disposed at least partially around a circumference of the elongate portion of the second housing. In certain embodiments, the tube bundle can be disposed around the entire circumference of the elongate portion of the second housing (e.g., such that the tube bundle forms a hollow cylindrical shape).

The second housing can define a plurality of holes in the elongate portion to allow fluid to flow between the second housing opening and first housing opening through the tube bundle. Each of the plurality of holes can be covered by the tube bundle, for example.

The tube bundle can include two rigid ends such that the tubes are adhered together at least at the ends thereof but are open to be vacuumed and/or purged. The rigid ends can be sealed between the second housing and the first housing to prevent fluid from flowing into the vacuum and/or the purge gas circuit. The rigid ends can be formed by adhering (e.g., with epoxy) the tubes of the tube bundle together at the ends thereof. The tube bundle can be configured such that the holes of the elongate portion and the first housing opening are between the rigid ends such that the rigid ends do not impede flow between the second housing and the first housing.

The base portion of the second housing can define a first vacuum and/or purge gas opening in fluid communication with a first rigid end of the tube bundle. The first housing can define a second vacuum and/or purge gas opening in fluid communication with a second rigid end of the tube bundle.

The second housing opening can be a fuel inlet and the first housing opening can be a fuel outlet. The first vacuum and/or purge gas opening can be an inlet and the second vacuum and/or purge gas opening can be an outlet; however, the reverse can be true.

Embodiments can be applied to any suitable fluid degassing systems, not just fuel. For example, certain embodiments can be a fluid degassing assembly that includes a first housing member, a second housing member disposed at least partially within the first housing member to define a fluid circuit therethrough, and a selectively permeable membrane tube bundle disposed around the second housing in the first flow circuit and configured to selectively filter one or more predetermined gases from a fluid flowing therethrough.

In accordance with at least one aspect of this disclosure, a fuel degassing arrangement can include a first housing, a second housing positioned at least partially radially of the first housing defining an annular space therebetween, an inlet and an outlet being defined in at least one of the first housing and the second housing configured to cause fluid flowing into the annular space through the inlet to flow radially across the annular space before exiting the annular space through the outlet, and a plurality of tubes positioned within the annular space having walls configured to be selectively permeable to at least one gas such that the at least one gas is able to flow through the walls thereby being separated from fluid passing radially through the annular space. The fluid can flow radially across the annular space passes over external surfaces of the walls. The tubes can be spaced apart from one another to allow fluid to flow radially through the annular space.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

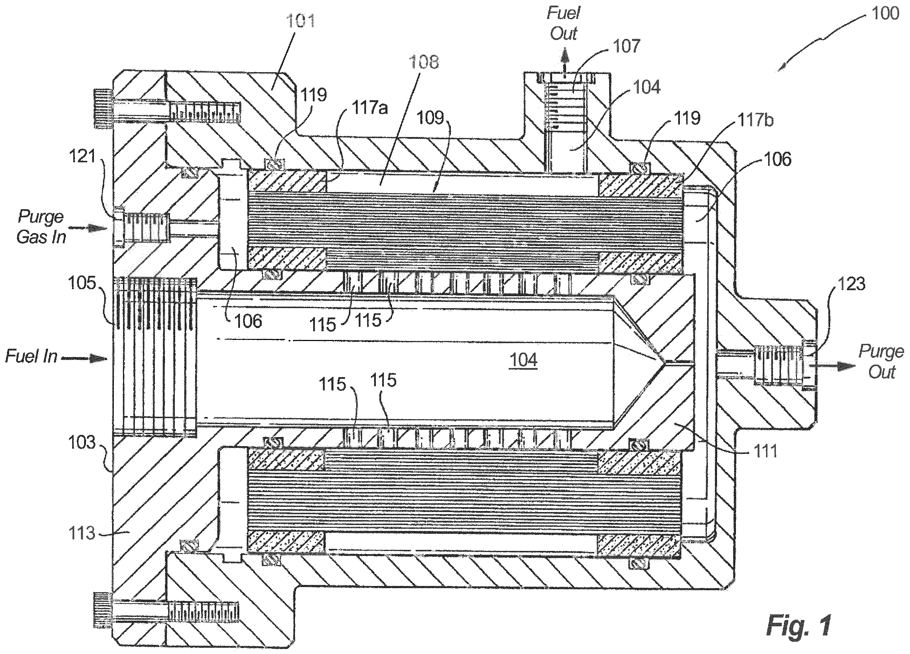

Fig. 1 is a cross-sectional view of an embodiment of device in accordance with this disclosure.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a device in accordance with the disclosure is shown in Fig. 1 and is designated generally by reference character 100. The systems and methods described herein can be used to more efficiently remove gas from liquids (e.g., oxygen from fuel).

In accordance with at least one aspect of this disclosure, a fuel deoxygenation device 100 can include a first housing 101, a second housing 103 disposed at least partially within the first housing 101, and a first flow circuit 104 defined by the second housing and first housing 103 and the first housing 101. The second housing 103 includes a second housing opening 105 of the first flow circuit 104 and the first housing 101 includes a first housing opening 107 of the first flow circuit 104.

The device 100 includes a tube bundle 109 of selectively permeable membrane tubes disposed in the first flow circuit 104 between the second housing 103 and first housing 101. The selectively permeable tubes are configured to remove oxygen from fuel in the first flow circuit 104 as appreciated by those having ordinary skill in the art, e.g., by being made of a material that allows oxygen and/or other dissolved gasses (e.g., nitrogen), to permeate through the tube walls into the hollow portion of the tube. The tube bundle 109 is disposed at least partially around a circumference of the second housing 103 and along any suitable dimensions thereof.

The tube bundle 109 includes any suitable number of tubes of any suitable length and/or shape. The tubes can be wound and/or woven around each other in any suitable manner. The tubes may be loose relative to each other and/or may be attached to one or more other tubes in any suitable manner. As shown, the tube bundle 109 can include an annular cylindrical shape or any other suitable shape.

The tube bundle 109 is configured to be in fluid communication with a second flow circuit 106 to fluidly communicate with the interior channel of the tubes of the tube bundle 109 (e.g., to remove oxygen or any other suitable gas therefrom). The second flow circuit 106 is partially fluidly isolated from the first flow circuit 104 such that at least one first fluid (e.g., jet fuel and/or acceptable gases therein) does not pass through a wall of one or more of the tubes, but such that at least one second fluid (e.g., a oxygen) can pass through the wall of the one or more tubes to remove the first fluid from the second fluid of the bundle 109.

The second housing 103 and the first housing 101 can have any suitable shape and/or fit together in any suitable manner. For example, the second housing 103 can include an elongate portion 111 extending from a base portion 113 that is configured to mount to the first housing 101. The tube bundle 109 can be disposed between the elongate portion 111 and the first housing 101. The tube bundle 109 can be disposed at least partially around a circumference of the elongate portion 111 of the second housing 103. In certain embodiments, as shown, the tube bundle 109 can be disposed around the entire circumference of the elongate portion 111 of the second housing 103 (e.g., such that the tube bundle 109 forms a hollow cylindrical shape).

The second housing 103 can define a plurality of holes 115 in the elongate portion 111 to allow fuel to flow between the second housing opening 105 and first housing opening 107 through the tube bundle 109. In certain embodiments, each of the plurality of holes 115 can be covered by the tube bundle 109, for example. Any suitable number of holes 115 and/or axial positons and/or circumferential positions for the holes 115 are contemplated herein. The holes 115 can include any suitable material disposed therein (e.g., foam, filtering media, etc.).

The tube bundle 109 can include two rigid ends 117a, 117b such that the tubes are adhered together at least at the ends thereof but are open to be vacuumed and/or purged (e.g., the hollow inside of the tubes are still open). The rigid ends 117a, 117b can be sealed between the second housing 103 and the first housing 101 to prevent fuel from flowing into the vacuum and/or the purge gas circuit 106 (e.g., using one or more seals 119). The rigid ends 117a, 117b can be formed by adhering (e.g., with epoxy) the tubes of the tube bundle 109 together at the ends thereof. The tube bundle 109 can be configured such that the holes 115 of the elongate portion 111 and the first housing opening 107 are between the rigid ends 117a, 117b such that the rigid ends 117a, 117b do not impede flow between the second housing 103 and the first housing 101.

The base portion 113 of the second housing 103 can define a first vacuum and/or purge gas opening 121 in fluid communication with a first rigid end 117a of the tube bundle 109. In certain embodiments, the first housing 101 can define a second vacuum and/or purge gas opening 123 in fluid communication with a second rigid end 117b of the tube bundle 109. It is contemplated that any suitable portion of device 100 can include the opening 121 and/or opening 123. In certain embodiments, only one opening 121, 123 may be needed (e.g., if a vacuum is used, only a single opening may be required).

In certain embodiments, the second housing opening 105 can be a fuel inlet and the first housing opening 107 can be a fuel outlet as shown. The first vacuum and/or purge gas opening 121 can be an inlet and the second vacuum and/or purge gas opening 123 can be an outlet as shown. The reverse can be true for the housing openings 105, 107 and/or the openings 121, 123.

In certain embodiments, the first flow circuit 104 can be a fuel flow circuit and the second flow circuit 106 can be a vacuum and/or purge gas circuit. In certain embodiments, the reverse flow scheme is possible such that fuel can be flowed through the second flow circuit 106 inside the tubes of the tube bundle 109 and a purge gas and/or vacuum can be applied to the first flow circuit. The first flow circuit 104 can include an annular space 108 defined between the second housing 103 and the first housing 101 that that the tube bundle 109 is disposed in. Flow in the first flow circuit 104 can exit the elongate portion 111 radially outward and enter the annular space 108, for example. The first flow circuit 104 can be defined such that the flow can travel circumferentially and/or radially between the first housing opening and the second housing opening 107 to enhance contact surface area with the walls of the tubes in the tube bundle 109 to enhance degassing of fluid in flowing in the first flow circuit.

Embodiments described herein can include a fuel degassing arrangement that can have a first housing, a second housing positioned at least partially radially of the first housing defining an annular space therebetween, an inlet and an outlet being defined in at least one of the first housing and the second housing configured to cause fluid flowing into the annular space through the inlet to flow radially across the annular space before exiting the annular space through the outlet, and a plurality of tubes positioned within the annular space having walls configured to be selectively permeable to at least one gas such that the at least one gas is able to flow through the walls thereby being separated from fluid passing radially through the annular space. The fluid can flow radially across the annular space passes over external surfaces of the walls. The tubes can be spaced apart from one another to allow fluid to flow radially through the annular space.

Embodiments can be applied to any suitable fluid degassing systems (e.g., for fuel deoxygenation or any other suitable fluid degassing). For example, certain embodiments can be a general fluid degassing device and the material that makes up the selective permeable membranes can be selected based on the desired gas to be removed as appreciated by those having ordinary skill in the art. In certain embodiments, fuel can be introduced at the center of the device 100 and flows through the axially spaced holes 115, and then through the tube bundle 109 in any suitable manner (e.g., circumferentially and/or radially). These holes 115 can be configured to allow uniform fuel flow through the tube bundle 109 to maximize the efficiency of each tube.

Embodiments cause fluid flow (e.g., fuel) to pass each selective tube membrane radially out to the exit which can cause each tube to be touched by the flow which increases efficiency of gas removal. Therefore, embodiments disclose an improved flow path for the fluid to be degassed (e.g., to force fuel to pass over all of the surfaces of the hollow tubes). Embodiments improve the efficiency of the membrane coated hollow tubes in deoxygenating fuel and for any other suitable use. Embodiments allow a smaller, lighter weight unit to be constructed (e.g., for aircraft usage).

The methods and systems of the present disclosure, as described above and shown in the drawings, provide for degassing devices with superior properties. While the apparatus and methods of the subject disclosure have been shown and described with reference to embodiments, those skilled in the art will readily appreciate that changes and/or modifications may be made thereto without departing from the spirit and scope of the subject disclosure.

## Claims

1. A fluid degassing device, comprising:
a first housing (101);
a second housing (103) disposed at least partially within the first housing;
a first flow circuit (104) defined by the second housing (103) and the first housing (101), wherein the second housing (103) includes a second housing opening (105) of the first flow circuit (104) and the first housing includes a first housing opening (107) of the first flow circuit (104); and
a tube bundle (109) of selectively permeable membrane tubes disposed in the first flow circuit (104) between the second housing (103) and first housing (101), wherein the tube bundle (109) is disposed at least partially around a circumference of the second housing, wherein the tube bundle is configured to be in fluid communication with a second flow circuit (106) to fluidly communicate with an inner channel of the tubes of the tube bundle, wherein the second flow circuit (106) is partially fluidly isolated from the first flow circuit (104) such that at least one first fluid cannot pass through a wall of one or more tubes, but such that at least one second fluid can pass through the wall of the one or more tubes to remove the first fluid from the second fluid.

2. The device of claim 1, wherein the second housing (103) includes an elongate portion extending from a base portion (113) that is configured to mount to the first housing (101), wherein the tube bundle (109) is disposed between the elongate portion and the first housing (101).

3. The device of claim 2, wherein the tube bundle (109) is disposed at least partially around a circumference of the elongate portion of the second housing (103).

4. The device of claim 3, wherein the tube bundle (109) is disposed around the entire circumference of the elongate portion of the second housing (103).

5. The device of claim 4, wherein the second housing (103) defines a plurality of holes (115) in the elongate portion (111) to allow fluid to flow between the second housing opening (105) and first housing opening (107) through the tube bundle (109), wherein each of the plurality of holes (115) is covered by the tube bundle (109).

6. The device of claim 5, wherein the tube bundle (109) includes two rigid ends such that the tubes are adhered together at least at the ends thereof but are open to be vacuumed and/or purged.

7. The device of claim 6, wherein the rigid ends are sealed between the second housing (103) and the first housing (101) to prevent fluid from flowing into the vacuum and/or the purge gas circuit.

8. The device of claim 7, wherein the rigid ends are formed by adhering the tubes of the tube bundle (109) together at the ends thereof.

9. The device of claim 7, wherein the tube bundle (109) is configured such that the holes (115) of the elongate portion (111) and the first housing opening (107) are between the rigid ends such that the rigid ends do not impede flow between the second housing (103) and the first housing (101).

10. The device of claim 7, the base portion of the second housing (103) defines a first vacuum and/or purge gas opening in fluid communication with a first rigid end of the tube bundle (109).

11. The device of claim 10, wherein the first housing defines a second vacuum and/or purge gas opening in fluid communication with a second rigid end of the tube bundle, and preferably wherein the first vacuum and/or purge gas opening is an inlet, and the second vacuum and/or purge gas opening is an outlet.

12. The device of any preceding claim, wherein the second housing opening is a fuel inlet and the first housing opening is a fuel outlet.

13. A fluid degassing assembly, comprising:
a first housing member (101);
a second housing member (103) disposed at least partially within the first housing member (101) to define a fluid circuit therethrough; and
a selectively permeable membrane tube bundle (109) disposed around the second housing (103) in the first flow circuit (104) and configured to selectively filter one or more predetermined gases from a fluid flowing through the first flow circuit (104).

14. A fuel degassing arrangement, comprising:
a first housing (101);
a second housing (103) positioned at least partially radially of the first housing (101) defining an annular space therebetween, an inlet and an outlet being defined in at least one of the first housing (101) and the second housing (103) configured to cause fluid flowing into the annular space through the inlet to flow radially across the annular space before exiting the annular space through the outlet; and
a plurality of tubes positioned within the annular space having walls configured to be selectively permeable to at least one gas such that the at least one gas is able to flow through the walls thereby being separated from fluid passing radially through the annular space.

15. The fuel degassing arrangement of claim 14, wherein the fluid flows radially across the annular space passes over external surfaces of the walls, and preferably wherein the tubes are spaced apart from one another to allow fluid to flow radially through the annular space.
